# EUROPEAN PATENT SPECIFICATION

(11) **EP 0 410 350 B1**
(45) Date of publication and mention of the grant of the patent: **06.07.1994**
(21) Application number: 90114080.6
(22) Date of filing: 23.07.1990
(51) Int. Cl.: C09K 11/84, C01F 17/00

(54) **Method for producing an yttrium oxysulfide fluorescent material**
Verfahren zur Herstellung eines Yttriumoxysulfid-Phosphors
Méthode de fabrication d'un matériau fluorescent à base d'oxysulfure d'yttrium

(30) Priority: 24.07.1989 JP 188827/89
(43) Date of publication of application: 30.01.1991
(73) Proprietor: SONY CORPORATION, Tokyo (JP)
(72) Inventor: Kimizuka, Yuichi, Shinagawa-ku, Tokyo (JP); Sano, Naoki, Shinagawa-ku, Tokyo (JP); Abe, Tomohiko, Shinagawa-ku, Tokyo (JP); Ohno, Katsutoshi, Shinagawa-ku, Tokyo (JP)
(74) Representative: TER MEER STEINMEISTER & PARTNER GbR

(56) References cited:
- FR-A- 1 565 525
- GB-A- 2 182 342
- US-A- 3 974 389
- DATABASE DERWENT WORLD PATENT INDEX AN 85-258666 "X-ray image conversion plate..." &JP60170687 (TOSHIBA) 04-09-85

## Description

This invention relates to a method for producing a yttrium oxysulfide fluorescent material which is used in a fluorescent face of a cathode ray tube and, more particularly, to a method which ensures the production of a small-sized powder of yttrium oxysulfide fluorescent material with a high luminance.

It is known that yttrium oxysulfide (Y₂O₂S) is converted into a red or green fluorescent material (hereinafter referred to yttrium oxysulfide fluorescent material) on activation with rare earth metals, such as samarium, europium and terbium. Yttrium oxysulfide has been employed in a fluorescent face of a projection cathode ray tube or cathode ray tube for a view finder of a video camera.

For the production of the yttrium oxysulfide, it is usual to provide a substance capable of producing an alkali metal sulfide or polysulfide, i.e., a mixture of sodium carbonate and sulfur, during a sintering process and a flux, such as sodium thiosulfate or potassium sulfide, mixing them with yttrium oxide (Y₂O₃) and a compound containing an activating element therefor, and sintering the mixture.

Among various factors influencing the characteristics of the yttrium oxysulfide fluorescent material, the particle size, its distribution and purity are very important factors in realizing high resolution, high image quality and high luminance of recent cathode ray tubes having a fine fluorescent pattern, such as a high precision vision. However, the yttrium oxysulfide fluorescent powder obtained by the known production process has an average size by volume of not less than approcimately 4 »m, and it is very difficult to obtain, as a highly pure (single phase) compound with high luminance, a small-sized fluorescent powder necessary for producing the above-mentioned cathode ray tubes. Accordingly, it has been conventional to collect fine particles with a size of less than 4 »m by classification of prepared particles having a relatively larger average size. However, the classification step requires a complicated procedure with a lowering in the yield of the fluorescent material and is, thus, unfavorable from the standpoint of productivity and economy.

GB-A-2 182 342 relates to a three-step method of preparing a fluorescent material comprising the steps of synthesising a single phase fluorescent material, pulverizing the thus prepared fluorescent material, and heat treating the pulverized material. Example 2 illustrates the preparation of an yttrium oxysulfide fluorescent material, wherein in a first step a mixture containing 250 g (1.1 mole) of Y₂O₃, 278.0 g (8.6 mole of S and 408.4 g (3.85 mole) Na₂CO₃ is subjected to a heat treatment.

It is accordingly an object of the invention to provide a method for producing a small-sized powder of yttrium oxysulfide fluorescent material with a high luminance by a simple procedure.

It is another object of the invention to provide a method for producing a small-sized powder of yttrium oxysulfide fluorescent material wherein the amounts of the two fluxes relative to the amount of the starting yttrium oxide, the flux composition and the sintering temperature are optimally selected whereby a yttrium oxysulfide fluorescent powder with a very small size can be obtained in a high yield, has a high purity and has a high luminance when applied against a fluorescent pattern.

It is a further object of the invention to provide a method for producing a small-sized powder of yttrium oxysulfide fluorescent material which is adapted for use in projection cathode ray tubes or other cathode ray tubes for view finders of video cameras.

In order to achieve the above objects, we made studies of a method for producing a yttrium oxysulfide fluorescent powder. We found that when sulfur and sodium carbonate, which are both used as a flux, are used in large excess within predetermined ranges so that the ratio between the sulfur and sodium carbonate is in a predetermined range and when the yttrium oxide is sintered along with these fluxes at an optimally selected range of temperatures, a small-sized yttrium oxysulfide powder of a single phase can be obtained reproducibly with a high yield.

Accordingly, the present invention provides a method for producing a yttrium oxysulfide fluorescent material, comprising the steps of
- providing a starting composition by adding a flux containing sodium carbonate and sulfur to yttrium oxide, the sodium carbonate and sulfur are, respectively, added in amounts by mole of from 2 to 10 times and from 4 to 20 times the amount of the yttrium oxide and at a molar ratio of sodium carbonate to sulfur in a range of from 0.2:1 to 1.25:1, excluding a starting composition wherein sodium carbonate and sulfur are, respectively, added in amounts by mole of 3.5 times and 7.8 times the amount of yttrium oxide and at a molar ratio of sodium carbonate to sulfur of 0.44; and then
- sintering the starting composition at a temperature in the range of from 900°C to 1100°C, to provide a small-sized powder of yttrium oxysulfide fluorescent material.

Figs. 1(A) to 1(C) are, respectively, characteristic plots showing the phase purity of fluorescent materials which are obtained by changing a flux composition under constant sintering temperature and sintering time conditions wherein Fig. 1(A) is for a sintering temperature of 1100°C, Fig. 1(B) is for 1000°C and Fig. 1(C) is for 900°C;
Figs. 2 to 5 are, respectively, X-ray diffraction spectral patterns wherein Fig. 2 is for a single phase yttrium oxysulfide fluorescent powder prepared according to the invention, Fig. 3 is for a starting yttrium oxide, Fig. 4 is for one example of a non-single phase powder and Fig. 5 is for another example of a non-single phase powder;
Figs. 6 and 7 are, respectively, emission spectral patterns wherein Fig. 6 is for a single phase yttrium oxysulfide fluorescent powder prepared according to the invention and Fig. 7 is for a powder of a non-single phase;
Fig. 8 is a characteristic view showing the co-relation of the molar ratio of flux ingredients, sintering time and phase purity at a constant sintering time;
Figs. 9(A) and 9(B) are, respectively, characteristic views showing the co-relation of the amounts of the respective fluxes, the sintering temperature and the single phase formation at a constant molar ratio and at a constant sintering time wherein Fig. 9(A) is for Na₂CO₃/S = 0.5 and Fig. 9(B) is for Na₂CO₃/S = 0.13;
Figs. 10(A) to 10(C) are, respectively, characteristic views showing a particle size of the powders obtained by changing the flux composition while using constant conditions for a sintering temperature and a sintering time wherein Fig. 10(A) is for a sintering temperature of 1100°C, Fig. 10(B) is for 1000°C and Fig. 10(C) is for 900°C;
Fig. 11 is a characteristic view showing the co-relation of the sintering temperature, sintering time and particle size at the time when sodium carbonate is used in an amount of 0.4 moles and Na₂CO₃/S = 0.5;
Fig. 12 is a characteristic view showing a relative luminance of the powders obtained by using different flux compositions at a constant sintering time; and
Fig. 13 is a characteristic view of a relative luminance of the powders obtained by using different flux compositions at a constant sintering temperature.

The production method of the invention is based on the reactions wherein sulfur and sodium carbonate are used as a flux and are reacted to produce either sodium sulfide (Na₂S) or sodium polysulfide (Na₂S_{X} wherein x is an integer of from 2 to 5), which is subseqently reacted with yttrium oxide to produce yttrium oxysulfide. As will be seen from the above, sulfur should not necessarily be added as a simple element. The ranges of the amounts of the sulfur and sodium carbonate are determined in view of the optimization of the characteristics of the resultant yttrium oxysulfide. If the amounts are below these ranges, the product may not be of the single phase or may have too large a size or both disadvantages may be produced. If the amount is over these ranges, any appreciable effect of the addition is not recognized with any practical merit, The molar ratio of sodium carbonate and sulfur should be selected in an optimum range. Outside the optimum range, there is a tendency toward a lowering of purity or an increase of particle size.

It is preferred that, in addition to the sodium carbonate and sulfur, a phosphate is used as a flux in an amount by mole of 1/1000 to 10 times the amount of yttrium oxide. Examples of the phosphate include ammonium hydrogenphosphate, sodium hydrogenphosphate, sodium phosphate, calcium hydrogenphosphate and potassium phosphate.

Generally, the above composition also comprises, in addition to the yttrium oxide and the fluxes, a compound which serves as a source for an activating element. The activating element includes, for example, samarium or europium used to obtain a red fluorescent material and terbium used to obtain a green fluorescent material. In many cases, these elements are added in the form of oxides. The amount depends on the desired degree of chromaticity and may be appropriately determined within a range of an amount ordinarily used for this purpose. The amount is approximately in the range of from 1/1000 to 1/5 times by mole the amount of yttrium oxide.

In order to mitigate the saturation phenomenon of luminance, a small amount of rare earth elements such as terbium or praseodymium is added so that they are finally taken into the yttrium oxysulfide in an amount from 20 ppm to 30 ppm, based on the weight of the oxysulfide.

The sintering temperature is selected in a range of 900°C to 1100°C. At temperatures lower than 900°C, the luminance of the resultant yttrium oxysulfide fluorescent powder becomes poorer, owing to the shortage of sulfur from the stoichiometric standpoint, the residue of unreacted starting materials and the non-uniformity of the crystal structure. Preferably, the lower limit should be 950°C. Over 1100°C, the particle size becomes larger than desired, with an attendant disadvantage of the possibility that there is produced a compound wherein part of the yttrium in the yttrium oxide is replaced by europium with a lowering of the purity.

Although the sintering time is not critical, if the above various requirements are satisfied, the time which has been ordinarily applied to the field of production of rare earth fluorescent materials may be applied. This time is approximately in a range of from 1 to 5 hours.

In the method for producing a yttrium oxysulfide fluorescent powder according to the invention, the amounts of the fluxes relative to yttrium oxide, the molar ratio of the flux ingredients and the sintering temperature are optimally selected, so that a small-sized fluorescent powder of a single phase in a high yield is obtained without any appreciable changes of the known processes.

As will be apparent from the above, in the method for producing a yttrium oxysulfide fluorescent material according to the invention, the amounts of fluxes relative to the amount of yttrium oxide, the flux composition and the sintering temperature are optimally selected, so that a fluorescent powder having a very small size and high purity and high luminance can be obtained by a simple procedure. The small size of the fluorescent powder has a number of advantages with respect to the quality, productivity and economy. These advantages include a reduction in surface irregularity of a fluorescent face with an attendant improvement of the reflectivity of a metal back, a reduction of the defects, such as pinholes, an improvement of the packing density with an attendant saving in amount of the fluorescent material, an improvement in the adhesion between a glass panel and a fluorescent pattern, and a clearness of the profile of the fluorescent pattern. The yttrium oxysulfide fluorescent powder is very suitable for use in fluorescent faces, such as for projection cathode ray tubes and other cathode ray tubes for view finders of video cameras which require high resolution and high precision.

The present invention is more particularly described by way of example.

### Example:

Initially, the conditions for producing europium-activated yttrium oxysulfide as a single phase under constant sintering temperature and constant time conditions were studied.

Samples of 0.1 mole of yttrium oxide, 3.85 moles of europium oxide (Eu₂O₃), 20 ppm of terbium oxide (Tb₂O₃) based on the yttrium oxide, 0.2 to 3.5 moles of sulfur, 0.1 to 1.0 mole of sodium carbonate, and 0.03 moles of ammonium hydrogenphosphate were weighed and mixed. Each sample or mixture was placed in an alumina crucible. Subsequently, the sample mixtures were sintered at different temperatures of 1100°C, 1000°C and 900°C for 1 hour, followed by washing with water, filtration and drying to obtain an europium-activated yttrium oxysulfide powder. The, thus, obtained powder was subjected to measurements of the X-ray diffraction spectrum using a CuK α ray and the emission spectrum to determine whether the powder was of a simple phase or not.

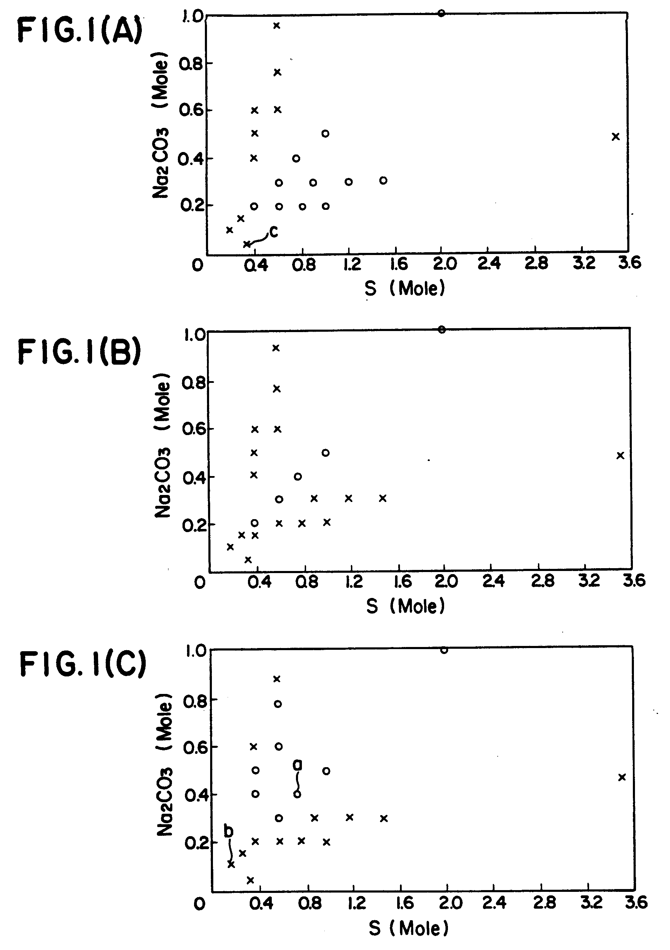

The results are shown in Figs. 1(A) to 1(C). In these Figures, the ordinate axis indicates an amount by mole of sodium carbonate (Na₂CO₃) and the abscissa axis indicates an amount by mole of sulfur. The sample where the produced powder was recognized as a single phase is marked as "o" and the sample where no single phase was recognized is marked as "x". Fig. 1(A) is for the sintering temperature of 1100°C, Fig. 1(B) is for the sintering temperature of 1000°C, and Fig. 1 (C) is for a sintering temperature of 900°C.

With the sample where the sintering temperature is 1100°C, the single phase is formed, as shown in Fig. 1(A), when sodium carbonate is used in amounts of not less than 0.2 moles per 0.1 mole of yttrium oxide and a molar ratio between sodium carbonate and sulfur (hereinafter referred to as Na₂CO₃/S) is in the range of 0.2 to 0.5. With the sintering temperature of 1000°C, as shown in Fig. 1(B), the single phase is attained when the amount of sodium carbonate is not less than 0.2 moles and Na₂CO₃/S = 0.5. With the sintering temperature of 900°C, the single phase is attained when the amount of sodium carbonate is not less than 0.3 moles and Na₂CO₃/S = 0.5 to 1.25, as shown in Fig. 1(C).

It will be noted that whether or not the powder is of the single phase was determined on the basis of the following spectral facts.

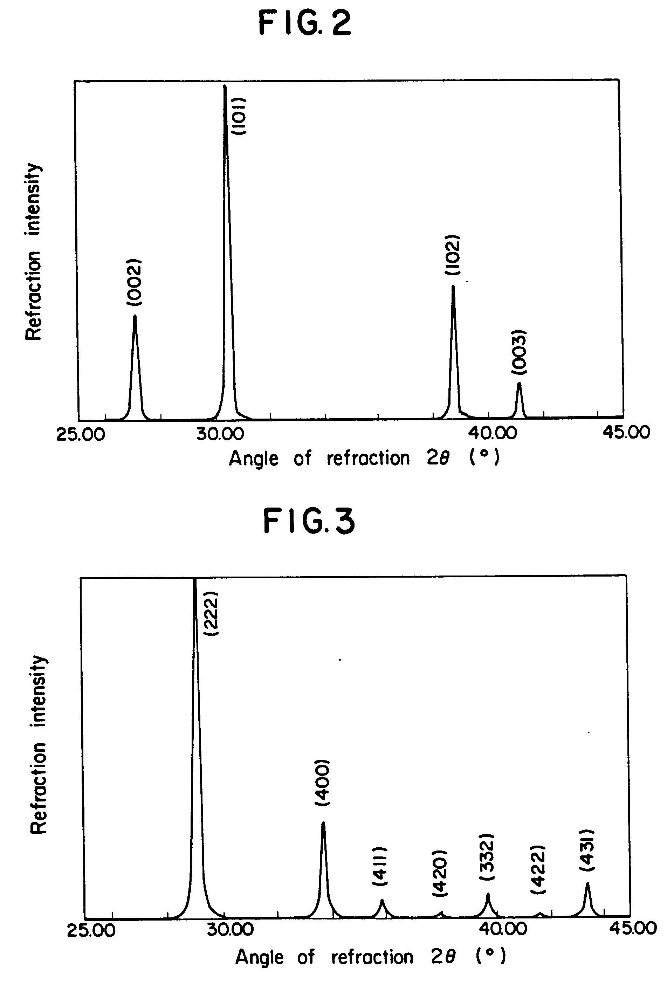

The X-ray diffraction pattern of the powder corresponding to the plot or point a in Fig. 1(C) is shown in Fig. 2. The ordinate axis is a diffraction angle, 2ϑ(°), and the Figures in parentheses indicated in the vicinity of the respective peaks represent an index of the diffraction plane. From the Figure, it will be found that the powder has a single phase and is made of a hexagonal system of europium-activated yttrium oxysulfide (although it contains a small amount of terbium herein and whenever it appears hereinafter).

The X-ray diffraction pattern of a single phase, cubic system yttrium oxide used as a starting material is a completely different pattern as is shown in Fig. 3.

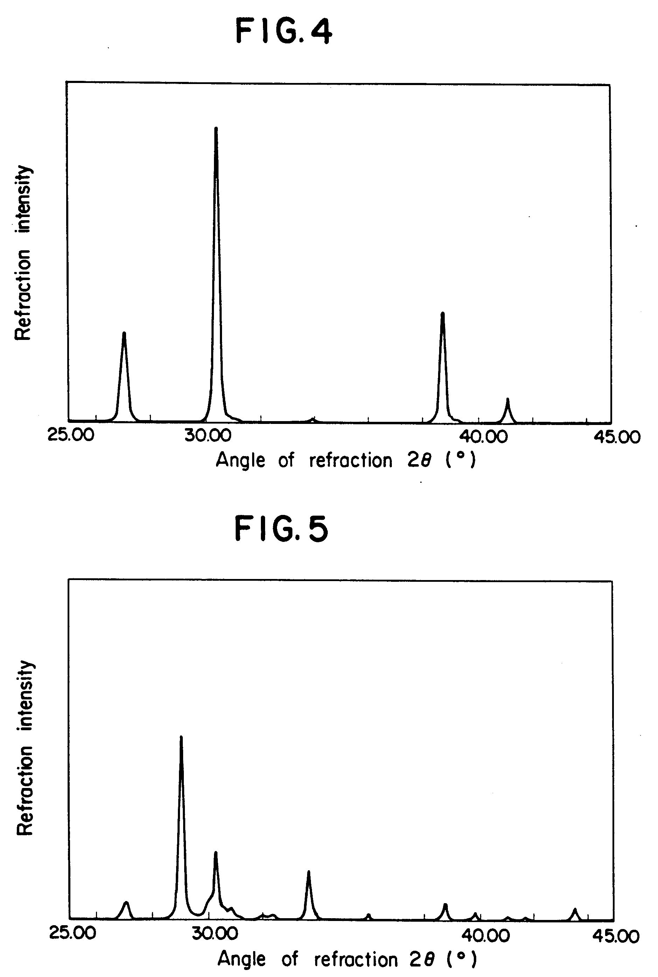

When the powder obtained after sintering is not of the single phase, there appears a variation in the pattern wherein part of the peaks in Fig. 3 may be added to the peaks of Fig. 2 or completely different peaks may appear. For instance, the X-ray diffraction pattern of the powder corresponding to plot, b, of Fig. 1(C)) is shown in Fig. 4. This pattern is similar to the pattern of Fig. 2 and indicates that most of the powder is made of the intended product, but a small peak appears slightly in the vicinity of 2ϑ = 34°, which is considered to be a diffraction peak from the (411) plane of yttrium oxide. Thus, it cannot be recognized that this powder sample is made of a complete single phase.

The X-ray diffraction pattern of the powder sample corresponding to the plot, c, in Fig. 1(A) is shown in Fig. 5. In this Figure there appears, aside from peaks derived from the intended product and starting yttrium oxide, several small peaks which are considered to be derived from europium-activated yttrium oxysulfide, with a very low purity.

Gathering the above, the pattern of Fig. 2 was taken as a criterion for a single phase in the measurement of the X-ray diffraction spectrum.

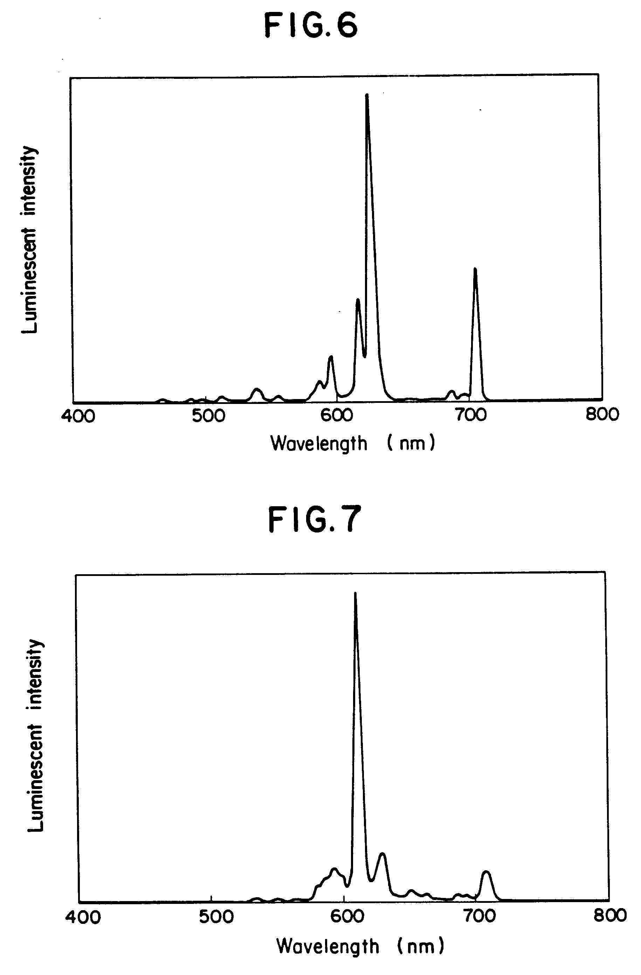

Moreover, the determination as to whether the single phase is formed or not may be made using an emission spectrum. The emission spectrum of the powder corresponding to the plot, a, in Fig. 1(C) is shown in Fig. 6. Where europium-activated yttrium oxysulfide of the single phase and hexagonal system is obtained, a pattern having a main peak at 627 nm appears. The chromaticity of the powder is expressed as x = 0.643 and y = 0.347 in color coordinates. In contrast, the emission spectrum of the powder corresponding to plot, c, in Fig. 1(A) has a pattern having a main peak at 612 nm, as shown in Fig. 7. The chromaticity of the powder is expressed as x = 0.641 and y = 0.351 in color coordinates, revealing that the product has apparently a different chromaticity from that of Fig. 6.

From this, the pattern of Fig. 6 was used as a criterion for a single phase in the measurement of the emission spectrum.

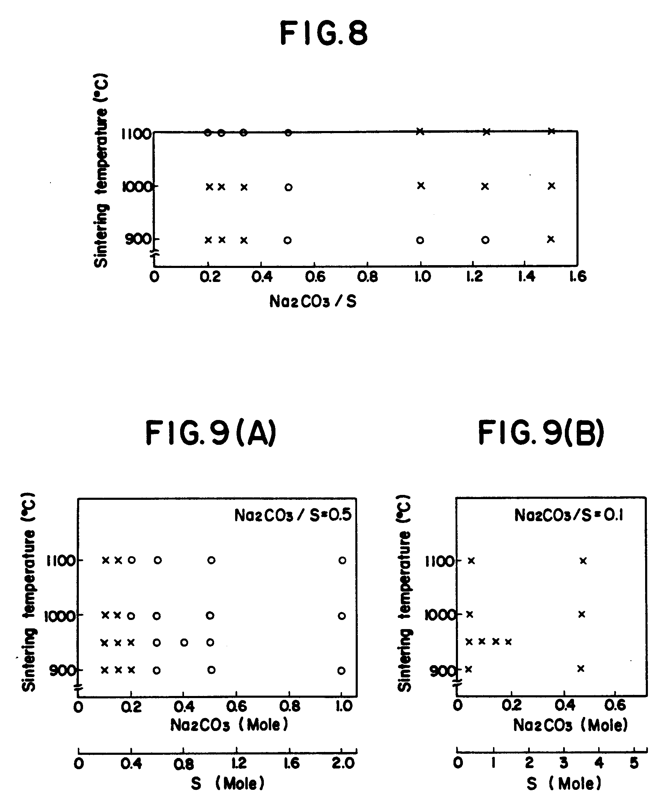

When the results of Figs. 1(A) to 1(C) are re-plotted in order to show the relation between the value of Na₂CO₃/S and the sintering tcmperature, Fig. 8, is obtained. In the Figure, the ordinate axis indicates the sintering tcmperature (°C) and the abscissa axis indicates the value of Na₂CO₃/S, which is a molar ratio between the flux ingredients and not the actually employed amounts. The Figure reveals that the molar ratio of the flux ingredients at which the single phase is formed becomes smaller at higher temperatures. When Na₂CO₃/S = 0.5, the single phase was attained at any sintering temperature.

Then, a single phase achievement was checked for a prolonged sintering time of 3 hours for the samples where Na₂CO₃/S = 0.5 at which it is considered that there is a relatively great possibility of achieving the single phase at all temperatures and for the samples where Na₂CO₃/S = 0.13, at which it is considered through a series of our experiments that a single phase is difficult to attain. Four sintering temperatures were used, including 1100°C, 1000°C, 950°C and 900°C. The results are shown in Figs. 9(A) and 9(B). In the Figures, the ordinate axis indicates the sintering temperature (°C) and the abscissa axis indicates the moles of sodium carbonate (Na₂CO₃) and sulfur (S), respectively. Fig. 9(A) is for the samples with Na₂CO₃/S = 0.5, and Fig. 9(B) is for the samples with Na₂CO₃/S = 0.13.

From these Figures, it will be seen that for the flux composition with which the single phase was not achieved at a sintering time of 1 hour, the single phase was not achieved as well, irrespective of the value of Na₂CO₃/S, even when the sintering time was prolonged to 3 hours. It will also be seen that the formation of the single phase depends on both the molar ratio of the flux ingredients and the amounts of the fluxes. In the case of Na₂CO₃/S = 0.5, there is recognized a tendency that the single phase is achieved with a smaller amount of flux as the sintering temperature becomes higher.

In the above, the purity of the powder has been studied and then the particle size is described.

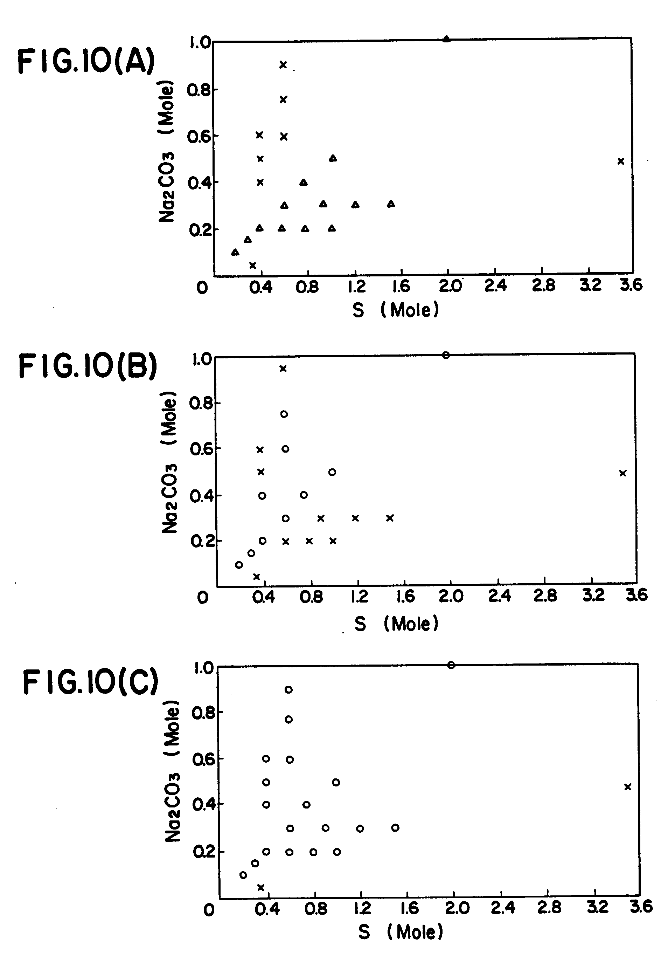

The relation between the amounts of the respective flux ingredients and the size of the powder for different sintering temperatures was checked as corresponding to Figs. 1(A) to 1(C). The results are shown in Figs. 10(A) to 10(C). In these Figures, the ordinate axis indicates an amount by mole of sodium carbonate (Na₂CO₃) and the abscissa axis indicates an amount by mole of sulfur (S). With regard to the particle size, a yttrium oxysulfide fluorescent powder having a size of 4 »m has been obtained by known techniques and a size of 3 »m which is smaller than the known size is determined as standards for evaluation. More particularly, plotted as "o" is a size which is apparently smaller than 3 »m, as "△" is a size of about 3 »m, and as "x" is a size which is apparently larger than 3 »m. Figs. 10(A), 10(B) and 10(C), respectively, correspond to sintering temperatures of 1100°C, 1000°C and 900°C.

These Figures reveal that higher temperatures tend toward a larger size. The combination of Figs. 10(A) to 10(C) with Figs. 1(A) to 1(C) demonstrates that those products wherein the single phase formation was confirmed almost result in a small size.

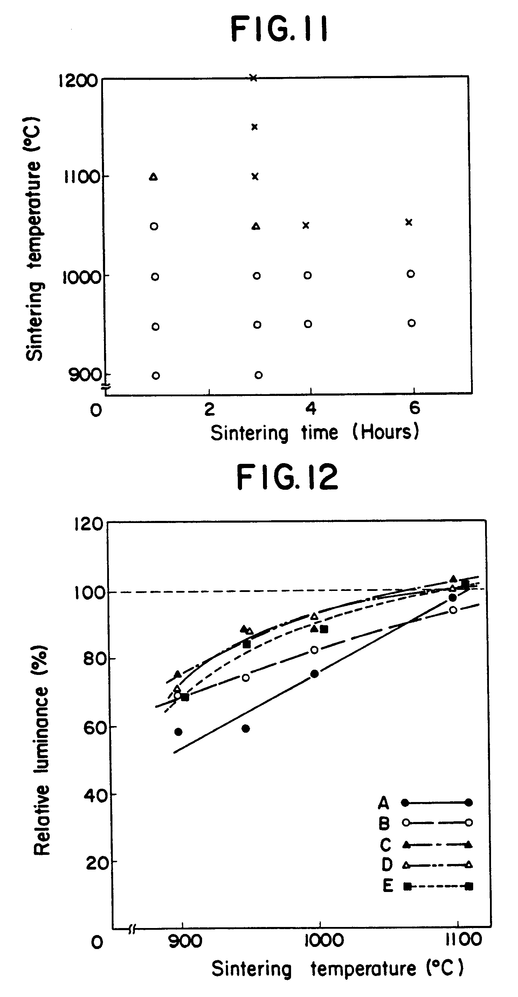

Next, there was checked the particle size of yttrium oxysulfide fluorescent powders which were obtained using 0.4 moles of sodium carbonate and Na₂CO₃/S = 0.5 wherein the sintering temperature was varied in the range of from 900°C to 1200°C and the sintering time was varied in the range of from 1 to 6 hours. The results are shown in Fig. 11. In the Figure, the ordinate axis indicates the sintering time (hours). From the Figure, it will be seen that higher sintering temperatures and longer sintering times tend to give a larger particle size.

Finally, in order to investigate utility of the powder as a fluorescent material, the luminance was measured. The measurement of the luminance was obtained by using a Digital Photometer, J16, available from Techtronics Co., Ltd., which has visual sensitivity characteristics. Since it is very difficult to obtain an absolute value of the luminance of a powder sample, the luminance was evaluated as a relative luminance to a commercially available green fluorescent material whose luminance is taken as 100%.

The results of a test on the influence of the flux composition and the sintering temperature on the relative luminance of product where the sintering time is 1 hour are shown in Fig. 12. In the Figure, the ordinate axis indicates a relative luminance (%) and the abscissa axis indicates a sintering temperature (°C). Line A is for samples wherein sodium carbonate and sulfur are, respectively, used in amounts of 0.1 mole and 0.2 moles per 0.1 mole of yttrium oxide, line B is for samples using 0.15 moles of sodium carbonate and 0.3 moles of sulfur, line C is for samples using 0.2 moles of sodium carbonate and 0.4 moles of sulfur, line D is for samples using 0.3 moles of sodium carbonate and 0.6 moles of sulfur, and line E is for samples using 0.5 moles of sodium carbonate and 1.0 mole of sulfur. In all the samples, Na₂CO₃/S = 0.5.

From the Figure, it will be seen that when the molar ratio of the flux ingredients is constant, there is the tendency toward an increasing relative luminance of the powder with an increasing sintering temperature. A choice of the proper conditions will result in a luminance which is equal to or higher than that of commercial products. However, care should be paid to the fact that even when the luminance is satisfactory, the increase of the sintering temperature may result in a difficulty in obtaining the single phase, a change of chromaticity and an undesirably large particle size.

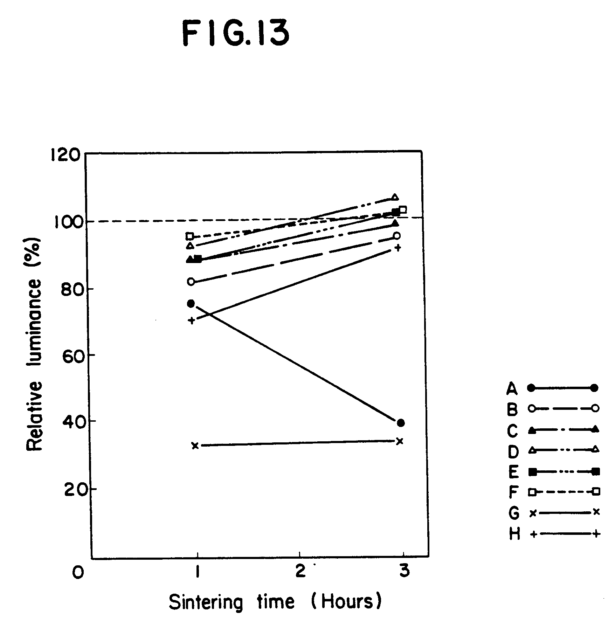

The results of the influence of the flux composition and the sintering time on the luminance of the resulting product where the sintering temperature is 1000°C are shown in Fig. 13. In this Figure, the ordinate axis indicates a relative luminance (%) and the abscissa axis indicates the sintering time (hours). Lines A to E have, respectively, the same meanings as set out with respect to Fig. 12. Line F is for samples where sodium carbonate and sulfur are, respectively, used in amounts of 0.4 moles and 0.8 moles per 0.1 mole of yttrium oxide, line G is for samples using 0.05 moles of sodium carbonate and 0.35 moles of sulfur, and line H is for samples using 0.45 moles of sodium carbonate and 3.5 moles of sulfur.

From Fig. 13, it will be seen that the relative luminance tends to increase with an increasing sintering time except for one case and that a choice of proper conditions will result in products having a luminance which is equal to or higher than those of commercial products. Care should also be paid in this case with respect to the formation of single phase and particle size.

Gathering the foregoing results, it will be apparent that fine particles of fluorescent materials which are of the single phase and have a size of not larger than 3 »m and a high luminance can be obtained when sodium carbonate and sulfur are, respectively, used in amounts of 0.2 to 1.0 mole of carbonate and 0.4 to 2.0 moles of sulfur per 0.1 mole of yttrium oxide in such a way that a molar ratio of sodium carbonate and sulfur is in the range of from 0.2 to 1.25 and when the sintering temperature is in the range of from 900°C to 1100°C.

Although various minor modifications may be suggested by those versed in the art, it should be understood that we wish to embody within the scope of the patent granted hereon all such modifications as reasonably and properly come within the scope of our contribution to the art.

## Claims

1. A method for producing a yttrium oxysulfide fluorescent material, comprising the steps of
- providing a starting composition by adding a flux containing sodium carbonate and sulfur to yttrium oxide, the sodium carbonate and sulfur are, respectively, added in amounts by mole of from 2 to 10 times and from 4 to 20 times the amount of the yttrium oxide and at a molar ratio of sodium carbonate to sulfur in a range of from 0.2:1 to 1.25:1, excluding a starting composition wherein sodium carbonate and sulfur are, respectively, added in amounts by mole of 3.5 times and 7.8 times the amount of yttrium oxide and at a molar ratio of sodium carbonate to sulfur of 0.44; and then
- sintering the starting composition at a temperature in the range of from 900°C to 1100°C, to provide a small-sized powder of yttrium oxysulfide fluorescent material.

2. The method according to claim 1, wherein the sintering is conducted at a temperature not lower than 950°C.

3. The method according to claim 1, wherein a phosphate in an amount by mole of from 1:1000 to 10 times the amount of the yttrium oxide is added to the starting composition.

4. The method according to claim 1, wherein an element selected from the group consisting of Sm and Eu in an amount by mole of from 1:1000 to 1:5 times the amount of the yttrium oxide is added to the starting composition, to provide a red fluorescent powder.

5. The method according to claim 1, wherein Tb in an amount by mole of from 1 : 1000 to 1:5 times the amount of the yttrium oxide is added to the starting composition, to provide a green fluorescent powder.

6. The method according to claim 1, wherein Tb or Pr is added to the starting composition, to provide an yttrium oxysulfide fluorescent material containing Tb or Pr in an amount from 20 ppm to 30 ppm.

## Patentansprüche

1. Verfahren zur Herstellung eines Yttriumoxysulfid-Leuchtstoffs, umfassend die Stufen
- Bereitstellen einer Ausgangszusammensetzung durch zugeben eines Natriumcarbonat und Schwefel enthaltenden Flußmittels zu Yttriumoxid, wobei das Natriumcarbonat und der Schwefel in Molmengen von dem 2- bis 10-fachen bzw. dem 4- bis 20-fachen der Menge des Yttriumoxids und bei einem Molverhältnis von Natriumcarbonat zu Schwefel im Bereich von 0,2:1 bis 1,25:1 zugegeben werden, mit Ausnahme einer Ausgangszusammensetzung, bei der Natriumcarbonat und Schwefel in Molmengen von dem 3,5-fachen bzw. 7,8-fachen der Menge des Yttriumoxids und bei einem Molverhältnis von Natriumcarbonat zu Schwefel von 0,44 zugegeben werden; und danach
- Sintern der Ausgangszusammensetzung bei einer Temperatur im Bereich von 900°C bis 1 100°C, um ein feinteiliges Pulver des Yttriumoxysulfid-Leuchtstoffs vorzusehen.

2. Verfahren nach Anspruch 1, wobei das Sintern bei einer Temperatur von nicht weniger als 950°C durchgeführt wird.

3. Verfahren nach Anspruch 1, wobei ein Phosphat in einer Molmenge von dem 1:1000 bis 10-fachen der Menge des Yttriumoxids der Ausgangszusammensetzung zugesetzt wird.

4. Verfahren nach Anspruch 1, wobei ein Element, welches aus der aus Sm und Eu bestehenden Gruppe gewählt wird, in einer Molmenge von dem 1:1000 bis 1:5-fachen der Menge des Yttriumoxids der Ausgangszusammensetzung zugesetzt wird, um ein rotes Leuchtstoffpulver vorzusehen.

5. Verfahren nach Anspruch 1, wobei Tb in einer Molmenge von dem 1:1000 bis 1:5-fachen der Menge des Yttriumoxids der Ausgangszusammsetzung zugesetzt wird, um ein grünes Leuchtstoffpulver vorzusehen.

6. Verfahren nach Anspruch 1, wobei Tb oder Pr der Ausgangszusammensetzung zugesetzt wird, um einen Yttriumoxysulfid-Leuchtstoff vorzusehen, welcher Tb oder Pr in einer Menge von 20 ppm bis 30 ppm enthält.

## Revendications

1. Procédé de fabrication d'un matériau fluorescent d'oxysulfure d'yttrium, comprenant les étapes suivantes:
- préparation d'une composition de départ par addition d'un flux contenant du carbonate de sodium et du soufre à de l'oxyde d'yttrium, le carbonate de sodium et le soufre sont ajoutés en des quantités par mole valant respectivement 2 à 10 fois et de 4 à 20 fois la quantité d'oxyde d'yttrium et avec un rapport molaire de carbonate de sodium sur soufre variant de 0,2 : 1, à 1,25 : 1, en excluant une composition de départ dans laquelle le carbonate de sodium et le soufre sont ajoutés en quantités par mole égale respectivement à 3,5 fois et 7,8 fois la quantité d'oxyde d'yttrium et avec un rapport molaire de carbonate de sodium sur soufre de 0,44; puis
- frittage de la composition de départ à une température dans la gamme de 900°C à 1100°C, pour obtenir une poudre à petits grains de matériau fluorescent d'oxysulfure d'yttrium.

2. Procédé selon la revendication 1, dans lequel le frittage est réalisé à une température non inférieure à 950°C.

3. Procédé selon la revendication 1, dans lequel on ajoute à la composition de départ un phosphate en quantité par mole valant de 1/1000 à 10 fois la quantité d'oxyde d'yttrium.

4. Procédé selon la revendication 1, dans lequel on ajoute à la composition de départ un élément sélectionné dans le groupe constitué de Sm et Eu en quantité par mole valant de 1/1000 à 1/5 fois la quantité d'oxyde d'yttrium, afin de fournir une poudre fluorescente rouge.

5. Procédé selon la revendication 1, dans lequel on ajoute à la composition de départ du Tb en quantité par mole valant de 1/1000 à 1/5 fois la quantité d'oxyde d'yttrium, afin de fournir une poudre fluorescente verte.

6. Procédé selon la revendication 1, dans lequel on ajoute à la composition de départ Tb ou Pr, afin de fournir un matériau fluorescent d'oxysulfure d'yttrium contenant Tb ou Pr en quantité de 20 ppm à 30 ppm.
